# EUROPÄISCHE PATENTSCHRIFT

(11) **EP 0 601 397 B1**
(45) Veröffentlichungstag und Bekanntmachung des Hinweises auf die Patenterteilung: **10.09.1997**
(21) Anmeldenummer: 93118956.7
(22) Anmeldetag: 25.11.1993
(51) Int. Cl.: B29C 43/10

(54) **Verfahren zur Herstellung von Formkörpern aus ultrahochmolekularem Polyethylen**
Method for producing shaped bodies from ultrahigh molecular weight polyethylene
Procédé pour la fabrication de corps moulés en polyéthylène à poids molécular ultra haut

(30) Priorität: 11.12.1992 DE 4241757
(43) Veröffentlichungstag der Anmeldung: 15.06.1994
(73) Patentinhaber: HOECHST AKTIENGESELLSCHAFT, 65926 Frankfurt am Main (DE)
(72) Erfinder: Gusik, Meinhard, D-46147 Oberhausen (DE)

(56) Entgegenhaltungen:
- US-A- 5 037 928
- PATENT ABSTRACTS OF JAPAN, unexamined applications, C Sektion, Band 7, Nr. 277, 9. Dezember 1983 THE PATENT OFFICE JAPANESE GOVERNMENT Seite 139 C 199; & JP-A-58-157 830 (NITTO DENKI KOKYO K.K.)
- PATENT ABSTRACTS OF JAPAN, unexamined applications, E Sektion, Band 17, Nr. 69, 10. Februar 1993 THE PATENT OFFICE JAPANESE GOVERNMENT Seite 60 E 1318; & JP-A-04-273 104 (UNITIKA LTD.)

## Beschreibung

Die Erfindung betrifft ein Verfahren zur Herstellung von Formkörpern aus pulverförmigem ultrahochmolekularem Polyethylen (PE-UHMW).

Unter ultrahochmolekularem Polyethylen versteht man nach Niederdruckverfahren erhaltene lineare Polyethylene mit viskosimetrisch gemessenen mittleren Molmassen von mindestens 1 x 10⁶ g/mol, insbesondere 2,5 x 10⁶ g/mol bis mehr als 1 x 10⁷ g/mol. Das zur Bestimmung der vorstehend genannten Molmassen angewandte Verfahren ist z.B. in CZ-Chemische Technik 4 (1974), 129 ff beschrieben.

PE-UHMW nimmt unter den Polyethylenen eine Sonderstellung ein. Es zeichnet sich durch eine Reihe physikalischer Kenndaten aus, die ihm vielfältige Einsatzmöglichkeiten eröffnet. Hervorzuheben sind sein hoher Verschleißwiderstand, sein niedriger Reibungskoeffizient gegenüber anderen Werkstoffen und sein ausgezeichnetes Zähigkeitsverhalten. Überdies ist es bemerkenswert beständig gegenüber zahlreichen Chemikalien.

Aufgrund seiner günstigen mechanischen, thermischen und chemischen Eigenschaften hat PE-UHMW in den verschiedensten Anwendungsgebieten Eingang als hochwertiger Spezialwerkstoff gefunden. Beispiele sind die Textilindustrie, der Maschinenbau, die chemische Industrie und der Bergbau.

Den vielfältigen Verwendungsmöglichkeiten des ultrahochmolekularen Polyethylen sind jedoch Grenzen gesetzt, die auf Schwierigkeiten bei seiner Verarbeitung beruhen. Im Gegensatz zu den niedermolekularen Polyethylentypen lassen sich nämlich die hochmolekularen Produkte wegen ihrer extrem hohen Schmelzviskosität nur über Pressen und Schnecken- bzw. Ramextruder verarbeiten. Preß- und Extrusionsverarbeitung liefern in vielen Fällen nur Halbzeug aus denen die gewünschten Formteile spanabhebend hergestellt werden müssen.

Ein Verfahren zur Herstellung fester Gegenstände aus PE-UHMW ist in der DE-A-24 25 396 beschrieben. Hierbei wird von pulverförmigem Einsatzmaterial ausgegangen, dessen Teilchen eine mittlerer Teilchengröße von weniger als 100 µm bei einer Verteilungsfunktion (die aus der Teilchenzählung bei einer Anzahl von Teilchengrößenintervallen ermittelt werden kann) von weniger als 0,8 haben. Das Pulver wird unter einem Druck von mindestens 140 kg/cm² bei einer Temperatur unterhalb des kristallinen Schmelzpunktes des Polyethylens zu einem festen Vorformling verpreßt. Nach Druckentlastung sintert man den Vorformling bei einer Temperatur oberhalb des kristallinen Schmelzpunktes. Da das ultrahochmolekulare Polyethylen aus dem Polymerisationsprozeß gewöhnlich Teilchen einer Größe oberhalb 100 µm enthält, ist es bei dieser Arbeitsweise erforderlich das Ausgangsmaterial durch entsprechende Maßnahmen, z.B. durch Mahlen zu zerkleinern. Ein zusätzlicher Nachteil der bekannten Arbeitsweise besteht darin, daß die Formkörper nicht homogen durchplastifiziert sind. Sie können sich daher während des Sinterungsprozeßes in Abhängigkeit von der angewandten Temperatur ausdehnen. Diese Erscheinung ist darauf zurüchzuführen, daß der Vorformling außerhalb einer Preßform gesintert wird. Als Folge hiervon sind die physikalischen Eigenschaften nicht reproduzierbar und streuen stark. Darüber hinaus ist eine strenge Maßhaltigkeit der Formlinge nicht gewährleistet.

Ein anderes Verfahren zur Herstellung von Formkörpern aus pulverförmigen Polyolefinen mit Molekulargewichten von mindestens 1 Million ist Gegenstand der DE-C-26 34 537. Die pulverförmigen Polymerisate werden in eine mit einem Stempel lose geschlossene Form bei 150 bis 250°C, vorzugsweise 190 bis 210°C in den gummielastischen Zustand überführt. Unmittelbar darauf verdichtet man in der Form unter Drücken von 2,5 bis 25 N/mm² in einer ersten Stufe mindestens 2 Minuten, darauf unter Drücken von 40 bis 100 N/mm² in einer zweiten Stufe mindestens 1 Minute und läßt darauf den Formkörper in der Form drucklos abkühlen. Dieses Verfahren hat sich in der Praxis gut bewährt, es ermöglicht aber lediglich die Herstellung von Formkörpern einfacher Geometrie.

Aus dem Kunststoff-Handbuch, Band IV, Polyolefine, Carl-Hauser-Verlag München, 1969, Seiten 505 und 506 ist ferner ein Preßverfahren zur Herstellung von Formkörpern aus ultrahochmolekularem Polyethylen bekannt. Im Anschluß an eine Kaltverdichtung des pulverförmigen Polymerisats in der Presse erfolgt die Abkühlung unter Druck. Infolge der hohen Verdichtung des Polymerisats während der Kaltverdichtung können auch mit diesem Verfahren nur Formkörper einfacher Geometrie hergestellt werden.

Es bestand daher die Aufgabe, ein Verfahren bereitzustellen, das die Fertigung von Formkörpern auch komplexer Gestalt aus pulverförmigem ultrahochmolekularem Polyethylen ermöglicht, ohne mit den Nachteilen und Grenzen der bekannten Verfahren belastet zu sein. Insbesondere muß es die Forderung erfüllen Produkte zu liefern, die völlig homogen sind und durchgängig gleiche physikalische Eigenschaften besitzen.

Die Erfindung löst die vorstehend beschriebene Aufgabe durch ein Verfahren zur Herstellung von Formkörpern aus pulverförmigem ultrahochmolekularem Polyethylen. Es ist dadurch gekennzeichnet, daß das Polymerisat in einer durch einen Stempel lose verschlossenen Form in einer Presse drucklos oder unter einem Druck bis zu 0,5 MPa auf 160 bis 280°C erhitzt und darauf unter einem Druck von 4 bis 20 MPa auf Raumtemperatur abgekühlt wird.

Das neue Verfahren erlaubt die Herstellung von Formkörpern unterschiedlicher und auch anspruchsvoller Geometrie aus PE-UHMW. Die Formkörper zeichnen sich durch hohe Homogenität und Maßhaltigkeit aus.

Als Einsatzmaterial geeignet sind alle Arten pulverförmiger ultrahochmolekularer Polyethylene, unabhängig von ihrer Herstellung. Dementsprechend lassen sich Polymerisate verarbeiten, die nach dem Ziegler-Prozeß durch Polymerisation von Ethylen in Gegenwart von Übergangsmetallen der 4. bis 6. Gruppe des Periodensystems der Elemente zusammen mit metallorganischen Verbindungen der Elemente der 1. bis 3. Gruppe des Periodensystems der Elemente erhalten wurden. Ebenso können aber auch ultrahochmolekulare Polyethylene eingesetzt werden, deren Herstellung aus wasserfreiem und sauerstofffreiem Ethylen in der Gasphase in Gegenwart Chromoxid und Metallalkyl enthaltender Trägerkatalysatoren erfolgte. Besonders bemerkenswert ist, daß die Polymerisate in der bei der Synthese anfallenden Teilchengröße verwendet werden können. Die mittlere Teilchengröße beträgt, in Abhängigkeit vom Polymerisationsprozeß, etwa 100 bis 400 µm, kann aber auch kleiner oder größer sein.

Das erfindungsgemäße Verfahren läßt sich in einfacher Weise durchführen. Das pulverförmige Polymerisat wird in eine beliebig gestaltete Form gefüllt, die mit einem passenden jedoch nicht luftdicht aufliegenden Stempel lose verschlossen ist. In dieser Verfahrensstufe übt der Stempel auf das Pulver nur einen geringen Druck (Kontaktdruck) aus, der bis zu 0,5 MPa beträgt. Anschließend wird das in der Form befindliche Pulver auf eine Temperatur von 160 bis 280 vorzugsweise 220 bis 250°C erhitzt. Dieser Vorgang kann unmittelbar in der Presse erfolgen, wobei die Wärmezufuhr von der oberen und der unteren Preßfläche erfolgt. Es kann aber auch eine heizbare Form verwendet werden. Schließlich ist es möglich die Erhitzung in einer gesonderten Vorrichtung z.B. in einem elektrischen Ofen vorzunehmen. Wegen der schlechten Wärmeleitung baut sich in der Pulverschüttung ein Temperaturgradient auf mit der Folge, daß die Temperatur von den Randschichten in das Innere der Form abnimmt. Um Inhomogenitäten im fertigen Preßprodukt zu vermeiden, ist darauf zu achten, daß in allen Teilen der Pulverschüttung Temperaturen innerhalb der vorstehend genannten Bereiche vorliegen. Überhitzungen, auch örtlich begrenzte, sind zu vermeiden, damit das Material nicht thermisch geschädigt wird. Einer oxidativen Schädigung des erhitzten PE-UHMW kann durch Aufrechterhaltung einer Atmosphäre aus einem inerten Gas z.B. Stickstoff begegnet werden. Die Erhitzungsdauer ist abhängig vom Pulvervolumen und von der Geometrie des Formkörpers. Durch das Erhitzen geht das ultrahochmolekulare Polyethylen, das keinen eigentlichen Schmelzpunkt sondern einen Kristallitschmelzbereich (etwa 130 bis 135°C) besitzt, in den viskoelastischen Zustand über. Das Gewicht des lose aufliegenden Formstempels führt zu einer geringfügigen Verdichtung der Pulverschüttung, sowie zu einer weitgehenden Entgasung der Formmasse.

Sobald die Verarbeitungstemperatur von 160 bis 280, insbesondere 220 bis 250°C erreicht ist, wird das in der Form befindliche Polymerisat unter einen Druck von 4 bis 20 vorzugsweise von 8 bis 14 MPa gesetzt. Der anzuwendende Druck ist insbesondere abhängig von der zu verarbeitenden Polymerisatmenge und der Geometrie des Formkörpers. Höhere Drücke sind bei großen Polymerisatmengen und bei Formen anzuwenden, die aus Bereichen mit stark voneinander abweichenden Wandstärken bestehen. Die Verarbeitungstemperatur wird aufrecht erhalten bis der Preßstempel in der Form bei gleichbleibendem Druck seine Endlage eingenommen hat. Dieser Vorgang ist im allgemeinen innerhalb von 1 bis 5 min beendet. Unter Aufrechterhaltung des Druckes kühlt man nunmehr den Formkörper auf Raumtemperatur ab. Die Abkühlung kann durch Wärmeaustausch mit der umgebenden Atmosphäre erfolgen, sie kann durch Verwendung von Kühlmitteln in der oberen und unteren Preßplatte oder in der Form beschleunigt werden. Die Abkühlungsdauer richtet sich nach der Größe des Formkörpers und nach der Art des Wärmeaustausches.

In jeder Phase des Verfahrens vor der Abkühlung unter Druck ist es möglich, pulverförmiges PE-UHMW in die Form nachzufüllen, falls die zur Herstellung des gewünschten Formkörpers benötigte Materialmenge im Verlauf des Prozesses ergänzt werden muß. Hierbei ist zu berücksichtigen, daß das Schüttvolumen des Polyethylenpulvers etwa 2 bis 2,5 mal größer ist, als das Volumen des aus ihm gefertigten Formkörpers. Selbstverständlich ist das neu hinzugeführte Pulver derselben thermischen und Druckbehandlung zu unterwerfen wie das ursprünglich eingesetzte. Zweckmäßiger ist es aber der Form eine Kammer vorzulagern, aus der Polymerisatpulver in dem Maße, in dem es zur Füllung der Form benötigt wird, kontinuierlich nachdosiert werden kann und den Hubweg so zu bemessen, daß sich das Pulver in einem Arbeitsgang verdichten läßt. Der abgekühlte Körper ist vollständig plastifiziert und lunkerfrei; er kann mühelos entformt werden.

Das erfindungsgemäße Verfahren ermöglicht die Herstellung maßhaltiger Formteile aus ultrahochmolekularem Polyethylen durch Pressen. Eine materialaufwendige, spanabhebende Nachbearbeitung ist nicht erforderlich. Die Druckbehandlung der plastifizierten Formlinge nimmt nur geringe Zeit in Anspruch, so daß sich die Preßkapazität in hohem Maße nutzen läßt. Überdies kann die Druckbehandlung nach dem Aufheizen bei Raumtemperatur erfolgen, sie verläuft also mit geringem Energieaufwand. Die neue Arbeitsweise gewährleistet durch Verwendung von Mehrfachpressen oder die Benutzung automatischer Verarbeitsungsabläufe eine hohe Ausstoßrate. Sie ist zur Fertigung von Formkörpern beliebiger Gestalt geeignet. So können kompliziert geformte Maschinenteile wie Pumpengehäuse, Pumpenlaufräder und Absperrelemente z.B. für Chemieappa-raturen in hoher Qualität hergestellt werden. Es lassen sich aber auch Platten aus PE-UHMW mit einer Dicke von etwa 10 mm und weniger anfertigen, die bisher nur durch Spalten von Polyolefinblöcken erhalten werden konnten.

## Patentansprüche

1. Verfahren zur Herstellung von Formkörpern komplexer Gestalt aus pulverförmigem ultrahochmolekularem Polyethylen dadurch gekennzeichnet, daß das Polymerisat in einer durch einen Stempel lose verschlossenen Form in einer Presse drucklos oder unter einem Druck bis zu 0,5 MPa auf 160 bis 280°C erhitzt und darauf unter einem Druck von 4 bis 20 MPa auf Raumtemperatur abgekühlt wird.

2. Verfahren nach Anspruch 1 dadurch gekennzeichnet, daß das ultrahochmolekulare Polyethylen auf 220 bis 250°C erhitzt wird.

3. Verfahren nach Anspruch 1 oder 2 dadurch gekennzeichnet, daß das Erhitzen in Inertgasatmosphäre erfolgt.

4. Verfahren nach einem oder mehreren der Ansprüche 1 bis 3 dadurch gekennzeichnet, daß die Abkühlung des Polymerisats in der Presse unter einem Druck von 8 bis 14 MPa erfolgt.

## Claims

1. A process for producing moldings of a complex form from pulverulent ultra high molecular weight polyethylene, which comprises heating the polymer to from 160 to 280°C in a mold loosely closed by a punch in a press, without applying pressure or at a pressure of up to 0.5 MPa, and then cooling it to room temperature at a pressure of from 4 to 20 MPa.

2. The process as claimed in claim 1, wherein the ultra high molecular weight polyethylene is heated to from 220 to 250°C.

3. The process as claimed in claim 1 or 2, wherein the heating is carried out in an inert gas atmosphere.

4. The process as claimed in one or more of claims 1 to 3, wherein the polymer is cooled in the press at a pressure of from 8 to 14 MPa.

## Revendications

1. Procédé pour la fabrication de corps moulés de forme complexe à partir de polyéthylène de masse moléculaire ultra haute sous forme poudreuse, caractérisé en ce que le polymère est chauffé dans une presse entre 160 et 280°C, dans un moule fermé lâchement par un tampon, sans pression ou sous une pression pouvant atteindre 0,5 MPa, et est ensuite refroidi jusqu'à température ambiante sous une pression de 4 à 20 MPa.

2. Procédé selon la revendication 1, caractérisé en ce que le polyéthylène de masse moléculaire ultra haute est chauffé entre 220 et 250°C.

3. Procédé selon les revendications 1 ou 2, caractérisé en ce que le chauffage s'effectue dans une atmosphère de gaz inerte.

4. Procédé selon l'une ou plusieurs des revendications 1 à 3, caractérisé en ce que le refroidissement du polymère s'effectue dans la presse sous une pression de 8 à 14 MPa.
